# EUROPEAN PATENT APPLICATION

(11) **EP 4 763 383 A1**
(43) Date of publication of application: **24.06.2026**
(21) Application number: 24222299.0
(22) Date of filing: 20.12.2024
(51) Int. Cl.: B23B 27/00, B23B 25/06, B23B 29/08, B23B 29/12, B23Q 17/09

(54) **TURNING TOOL WITH SENSOR MODULE**

(71) Applicant: AB Sandvik Coromant, 811 81 Sandviken (SE)
(72) Inventor: JENSEN, Tormod, 811 81 SANDVIKEN (SE); VEDELD, Roger, 811 81 SANDVIKEN (SE); OTTESEN, Einar, 811 81 SANDVIKEN (SE)
(74) Representative: Sandvik

(57) **Abstract**

The invention relates to a turning tool (1) for machining a metal workpiece (20), wherein the turning tool comprises a tool body (10) including an outer peripheral surface (2), a front end (3), a rear end (4), and a longitudinal axis (C) extending from the front end (3) to the rear end (4). The turning tool (1) further comprises a sensor module (100) including at least one sensor (5, 15) for measuring a machining parameter. The sensor module (100) is mounted on a mounting surface portion (M) of the outer peripheral surface (2) of the tool body (10). The sensor module (100) has a first maximum extension (D1) from a first central plane (CP1) in a direction that is codirectional and parallel to a first radial direction (R1), and a second maximum extension (D2) from a second central plane (CP2) in a direction that is codirectional and parallel to a second radial direction (R2), wherein the first maximum extension (D1) is greater than the second maximum extension (D2).

## Description

### TECHNICAL FIELD

The invention relates to metal cutting, and in particular to turning operations wherein a turning tool is used for machining a rotating metal workpiece.

### BACKGROUND ART

Within the field of metal cutting, a turning tool may be used for machining the surface of a rotating metal workpiece. A cutting insert, for example made of cemented carbide or some other wear resistant material, is commonly arranged at the front of such turning tool.

To optimize the cutting process, sensors may be used for measuring parameters during machining, and such measurements may be taken into consideration for adjusting the cutting process (in real-time or in subsequent machining operations) and/or to evaluate the machining results. There are some examples in the prior art where such sensors have been arranged at the tool body of a turning tool. Arranging sensors at the tool body may be beneficial for accurately measuring various parameters that may affect the machining results, such as deflection or vibrations of the turning tool. For example, the magnitude of such parameters may indicate different states, such as defects of the turning tool or the cutting insert, or other problems related to the cutting process. The sensors, and any related electronic components that are required, are usually integrated within, and to some extent hidden inside, the tool body of the turning tool. For example, EP4331751 discloses a turning tool with recesses formed in the tool body for accommodating sensors, power supply and other electronic components, wherein lids cover the recesses to protect the components. Such configuration may seem advantageous since it would not significantly change the appearance and external profile of the tool body and may also limit the exposure of sensitive electronic components to the machining environment. On the other hand, recesses within the tool body for accommodating sensors and electronics may reduce the strength of the tool body and thus, for example, its ability to withstand bending forces.

Accordingly, there is a need for improved sensor equipped turning tools that are strong and robust and have similar machining abilities as corresponding turning tools without sensors.

### SUMMARY

It is an object of the present invention to mitigate the shortcomings of the prior art and to provide a turning tool including one or more sensors for measuring one or more machining parameters, wherein the turning tool is robust and strong. Another objective is to provide such turning tool that is useable in many different types of machining operations without risk of colliding with the workpiece or with parts of an arrangement for holding the workpiece.

Thus, according to a first aspect, the invention relates to a turning tool for machining a metal workpiece, wherein the turning tool comprises a tool body including an outer peripheral surface, a front end and a rear end. A longitudinal axis extends from the front end to the rear end. The turning tool further comprises a sensor module including at least one sensor for measuring a machining parameter. The sensor module is mounted on a mounting surface portion of the outer peripheral surface of the tool body such that the sensor module extends radially outward from the mounting surface portion in one or more of a first radial direction, a second radial direction, a third radial direction, and a fourth radial direction, wherein the first radial direction is opposite the fourth radial direction, and the second radial direction is opposite the third radial direction, and wherein each of the second and third radial directions is orthogonal to each of the first and fourth radial directions. A first central plane of the turning tool contains the longitudinal axis and the second and third radial directions, and a second central plane of the turning tool contains the longitudinal axis and the first and fourth radial directions. The sensor module has a first maximum extension from the first central plane in a direction that is codirectional and parallel to the first radial direction, and a second maximum extension from the second central plane in a direction that is codirectional and parallel to the second radial direction. The first maximum extension is greater than the second maximum extension.

The inventors have found that a sensor module arranged at the exterior of a turning tool body, in contrast to inside a recess formed in the tool body, will limit any negative impact on the strength of the turning tool caused by the presence of the sensors and related electronics. Moreover, the inventors have found that such sensor module requires less, if any, modifications of the turning tool body, and a robust sensor equipped turning tool may therefore be obtained without significant adaptations of a conventional turning tool body used for the same application. Moreover, the use of a single sensor module in which all the required sensors and electronics are placed will not require any wires or connectors through the interface to the CNC machine at which the turning tool is mounted, thereby facilitating use, manufacturing, and service of a turning tool including such sensor module.

The inventors have also found that, when applied to a turning tool (in contrast to a rotating cutting tool), a symmetrical design of the sensor module is not necessary, and that the risk for interference, e.g. colliding with the workpiece or with the chucks holding the workpiece, during an external turning process (i.e., machining of the outer diameter of a workpiece) is greatest in a direction along which the turning tool would be moved during longitudinal turning. Accordingly, the inventors have found that an optimal design of the sensor module, minimizing risk of collisions during the cutting process, is achieved when the sensor module is allowed to have a greater extension along a first radial direction than along a second radial direction perpendicular to the first radial direction.

In view of an external turning operation, such second radial direction would be a direction parallel to the feed direction during longitudinal turning, i.e. a direction that, with respect to the workpiece, is parallel to a rotation axis of the workpiece when the turning tool is arranged for machining the workpiece in a position in which the longitudinal axis of the turning tool is perpendicular to the rotation axis of the workpiece (i.e., the spindle axis of the machine tool). Hence, in view of such machining operation, the first radial direction, in which the sensor module is allowed to have a greater extension, is perpendicular to the rotation axis of the workpiece.

The front end of the turning tool body may include a cutting insert or an insert seat in which a cutting insert can be arranged. Alternatively, the front end of the turning tool body may include an interface at which a cutting head is arrangeable, wherein such cutting head may include a cutting insert or a seat in which a cutting insert can be arranged.

Accordingly, with reference to the tool body of the turning tool, the second radial direction may be, with respect to a position of a cutting insert (or a seat therefor) or a cutting head (or an interface for mounting a cutting head), parallel to a feed direction that would be used if using the turning tool for external longitudinal turning with the turning tool arranged perpendicular to the rotation axis of the workpiece.

According to some embodiments, the first maximum extension may be at least 10% greater than the second maximum extension. If instead considering the maximum extensions along the respective first and second radial directions from the mounting surface portion, i.e., the thickness of the sensor module itself, the difference may be greater. For example, a maximum extension of the sensor module from the mounting surface portion in the first radial direction may be more than 30%, and for example more than 50%, greater than a maximum extension of the sensor module from the mounting surface portion in the second radial direction.

The rear end of the turning tool body may include a coupling portion that is arrangeable to a machine tool, for example via a tool holder. The machine tool may be a CNC lathe or some other machine tool useable for turning operations.

The sensor module may comprise a plurality of sensors for measuring different machining parameters. Sensor signals obtained from a plurality of sensors may also be jointly used for determining a machining parameter. A machining parameter should be understood as a parameter characterizing a machining process (or the results of a machining process). For example, a machining parameter may relate to cutting force, deflection, or vibration of the turning tool, measured in one or more different directions, such as in a radial direction or in a tangential direction (with respect to the workpiece being machined). Such parameters may be used to estimate other parameters characterizing the results of the machining process, such as geometry and/or roughness of the machined surface. Another example of a machining parameter is temperature.

The sensor module may include various other components, such as processing circuitry, power supply (e.g., a battery) and a transmitter for transmitting sensor signals, and one or more circuit boards on which sensors and components may be arranged.

The mounting surface portion may be located at the outer peripheral surface of the tool body at a position somewhere between the rear end and the front end. According to some embodiments, the mounting surface portion does not extend all the way forward to the front end or all the way rearward to the rear end. Hence, the sensor module may be spaced at least some distance from the front end and from the rear end, which may be beneficial for practical reasons (such as to not obstruct tool change, for example), and may be suitable in view of placement of different kinds of sensors or combination of sensors. Accordingly, the mounting surface portion and the sensor module may be located along the longitudinal axis in front of a coupling portion of the tool body and behind a cutting insert (or a seat therefor) or a cutting head (or an interface at which such cutting head is arrangeable) at the front of the tool body.

According to some embodiments, the mounting surface portion and the sensor module may be located in a region close to a middle (in the longitudinal direction) of the tool body between the front end and the rear end.

Also, the mounting surface portion and the sensor module may have a longitudinal extension (extension along the longitudinal axis of the tool body) that is relatively large in relation to the total longitudinal extension of the tool body. For example, according to some embodiments, the longitudinal extension of the mounting surface portion and the sensor module may correspond to at least 20% of the longitudinal extension of the tool body. The longitudinal extension of the tool body corresponds to the distance, along the longitudinal axis, from the front end to the rear end.

Accordingly, a first part of the mounting surface portion and the sensor module may be located on a rear half of the tool body, and a second part of the mounting surface portion and the sensor module may be located on a front half of the tool body.

A placement of the sensor module such that the sensor module is spaced from both the front end and from the rear end, but not too far from the front end or from the rear end, may provide for the possibility to place a first sensor (for example an accelerometer for measuring vibrations) at a position that is spaced from, but relatively close to, the front end, and place one or more second sensors (e.g., strain gauges for measuring force and/or deflection) at a position that is spaced from, but relatively close to, the rear end. This may result in a sensor module with multiple sensors providing accurate measurements of different machining parameters.

The sensor module has a housing that may include one or more laterally facing outer side wall portions and a forwardly facing outer front wall portion. The housing is an exterior housing of the sensor module, i.e., forming an outer border of the sensor module, both in an axial forward direction and in one or more radial directions with respect to the longitudinal axis of the tool body. In other words, for a cross-section through the sensor module perpendicular to the longitudinal axis, a radially outermost point of the sensor module would normally be a point on a laterally facing outer side wall portion, and, for a cross-section through the sensor module in a plane parallel with the longitudinal axis, an axially forwardmost point of the sensor module would normally be a point on the forwardly facing outer front wall portion.

A laterally facing outer side wall portion of the sensor module housing may be located in a plane parallel with the longitudinal axis. In other words, a normal to an outer side wall portion may extend in parallel to a radial direction with respect to the longitudinal axis. However, it is also envisaged that the outer side wall portions are oriented differently, and they are not necessarily completely flat. In this context, "laterally facing" should be understood as that a normal to such outer side wall portion has a greater component in a radial direction than in an axial direction with respect to the longitudinal axis.

Correspondingly, a forwardly facing outer front wall portion of the sensor module housing may be located in a plane perpendicular to the longitudinal axis. In other words, a normal to the outer front wall portion may extend in parallel to the longitudinal axis. However, it is also envisaged that the outer front wall portion is oriented differently, and it is not necessarily completely flat. In this context, "forwardly facing" should be understood as that a normal to such outer front wall portion has a greater component in an axial direction than in a radial direction with respect to the longitudinal axis.

The sensor module extends radially outward from the mounting surface portion of the outer peripheral surface of the tool body in one or more of the first, second, third, and fourth radial directions. In other words, the sensor module is, in comparison to the mounting surface portion, located at a greater radial distance from the longitudinal axis. However, the peripheral surface of the tool body may include other portions that are located at a greater radial distance from the longitudinal axis than the mounting surface portion. Such portions of the peripheral surface of the tool body may for example be located on parts of a coupling portion behind the sensor module and such parts may have a radial outward extension in one or more of the first, second, third, and fourth radial directions that is as great as, or even greater than, the radial outward extension of the sensor module in corresponding radial directions. Hence, the sensor module does not necessarily extend radially outward beyond *any* portion of the tool body. However, the radial outward extension of the sensor module in one or more of the first, second, third, and fourth radial directions, and for example in any of these radial directions, may be greater than a corresponding radial outward extension of portions of the tool body located in front of the sensor module. Moreover, according to some embodiments, the radial outward extension of the sensor module in at least one of the first, second, third, and fourth radial directions may be greater than a maximum radial outward extension of the tool body in any of these radial directions.

According to some embodiments, the sensor module has a third maximum extension from the second central plane in a direction that is codirectional and parallel to the third radial direction, and wherein the first maximum extension is greater than each of the second and third maximum extensions. Thereby, the extension of the sensor module may be relatively small in each of two opposite radial directions. This may be particularly beneficial for a turning tool that is useable, or can be configured to be used, for turning in any of two opposite directions, for example a turning tool having a tool body at which different cutting heads, adapted for machining in different directions, can be mounted. Hence, a small extension of the sensor module in each of these directions will increase the number of different machining operations in which the turning tool can be used without the sensor module getting in the way.

According to some embodiments, the sensor module has a fourth maximum extension from the first central plane in a direction that is codirectional and parallel to the fourth radial direction, and wherein each of the first and fourth maximum extensions is greater than each of the second and third maximum extensions. Thereby, the width of the sensor module in a direction parallel to the first and fourth radial directions is greater than the width of the sensor module in a direction parallel to the second and third radial directions. According to such embodiments, the sensor module is allowed to have a relatively great extension along both the first radial direction and along the fourth radial direction (opposite to the first radial direction) which makes it easy to house all required components in the sensor module while still achieving a small extension of the sensor module in the second and third radial directions.

The first maximum extension may have a similar relation with respect to the third maximum extension as it has with respect to the second maximum extension. Hence, according to some embodiments, the first maximum extension may be at least 10% greater than each of the second maximum extension and the third maximum extension. If instead considering the extension from the mounting surface portion, i.e., the thickness of the sensor module itself, the difference may be greater. For example, a maximum extension of the sensor module from the mounting surface portion in the first radial direction may be more than 30%, and for example more than 50%, greater than a maximum extension of the sensor module from the mounting surface portion in each of the second and third radial directions.

The fourth maximum extension may be similar to the first maximum extension. However, even if each of the first maximum extension and the fourth maximum extension is greater than each of the second maximum extension and the third maximum extension, the fourth maximum extension may still differ from (be slightly greater or slightly smaller than) the first maximum extension.

According to some embodiments, the total width of the sensor module in a direction parallel to the first and fourth radial directions may be at least 10%, and for example more than 20%, greater than the total width of the sensor module in a direction parallel to the second and third radial directions.

The mounting surface portion may extend all around the circumference of the outer peripheral surface of the tool body, and thus the sensor module may circumferentially enclose the tool body at the mounting surface portion.

Accordingly, laterally facing outer side wall portions of a sensor module housing may extend all around the circumference of the sensor module. The sensor module may be square, or substantially square, in a cross section perpendicular to the longitudinal axis of the tool body, and the sensor module housing may thus include a plurality of flat outer side wall portions. The sensor housing may include additional outer side wall portions, for example bent or rounded portions connecting the flat outer side wall portions.

According to some embodiments, the sensor module comprises a transmitter including an antenna for wireless transmission of sensor signals. The transmitter may be located in the sensor module at a radial position having a component in the first radial direction that is greater than a component in any of the second or third radial directions.

The transmitter may require a rather large space within the sensor module, particularly if considering that a certain distance between the transmitter and the tool body (and other metallic structures) may be advantageous or required to obtain a well-functioning transmission of signals. Thus, by arranging the transmitter as defined above, a sensor module that has extensions in the second and third radial directions that are smaller than the extension in the first radial direction can be obtained easily.

For the purposes of this disclosure, the radial position of the transmitter may be considered as the radial position of a geometric center of the transmitter.

According to some embodiments, a housing of the sensor module includes a window portion located radially outwards of the antenna of the transmitter such that sensor signals may be transmitted through the window portion. The window portion may be made of a non-metallic material, in particular a non-metallic material through which radio signals can be easily transmitted. To function properly, and to fulfill certain regulatory requirements on radio gain, a transmitter for wireless transmission of signals may have to be spaced a certain distance from metal. A window portion made of a non-metallic material may therefore be particularly useful if adjacent wall portions of the sensor housing are made of a metallic material. For example, the window portion may be made of plastic. The size (area) of the window portion may be selected such that signals can be easily transmitted, which may depend on the wavelength used for the transmission.

According to some embodiments, the sensor module comprises a battery located in the sensor module at a radial position having a component in the first or fourth radial direction that is greater than a component in any of the second or third radial direction. A battery may be bulky and require a large space. Thus, by arranging the battery in this way, a sensor module that has an extension that is smaller in the second and third radial direction than in the first and/or fourth radial direction can be easily obtained.

For the purposes of this disclosure, the radial position of the battery may be considered as the radial position of a geometric center of the battery.

If the battery is located at a radial position having a component in the fourth radial direction, and the sensor module also includes a transmitter located at a radial position having a component in the first radial direction, i.e., such that the transmitter and the battery are located on opposite sides of the first central plane that contains the longitudinal axis and the second and third radial directions, a sensor module can be achieved that has a width in a direction parallel to the first and fourth radial directions that is greater than the width of the sensor module in a direction parallel to the second and third radial directions, but nevertheless provides a convenient distribution of components in the sensor module. Such distribution of a transmitter and a battery, wherein these components do not interfere on each other's space, may facilitate battery change and provide favorable conditions for the transmitter to wirelessly transmit signals.

According to some embodiments, the outer peripheral surface of the tool body has a circular shape in a cross-section perpendicular to the longitudinal axis at the mounting surface portion. For example, such cross-sectional shape may be circular in cross-sections along a major part of the longitudinal extension of the mounting surface portion, and for example circular in *any* cross-section perpendicular to the longitudinal axis at the mounting surface portion. A radially innermost part of the sensor module, and in particular an inner surface thereof that is arranged against the mounting surface portion, may also have a circular cross-sectional shape complementary to the shape of the mounting surface portion, such as to facilitate secure mounting (for example by glue) of the sensor module at the mounting surface portion of the outer peripheral surface of the tool body.

The sensor module may include a frame structure that is connected to at least a part of the mounting surface portion of the peripheral surface of the tool body. Accordingly, such frame structure may have an innermost surface with a shape that is complementary to the shape of the corresponding parts of the mounting surface portion, such that the frame structure can be securely connected and mounted to at least a part of the mounting surface portion. The frame structure may hold other components of the sensor module, such as one or more circuit boards on which one or more sensors and/or other electronic components, such as processing circuitry and a transmitter, are mounted.

The frame structure may be made of a non-metallic material, such as a plastic that is rigid enough to provide a sufficiently strong sensor module. A non-metallic frame structure has the additional benefit of providing a certain distance between the tool body (made of metal) and a transmitter arranged in the sensor module for wireless transmission of sensor signals, which, as discussed previously, may be beneficial or even required depending on the characteristics of the transmitter.

A frame structure on which other components of the sensor module are arranged is beneficial from a manufacturing point of view since various components, such as circuit boards and other electronic components, would not have to be mounted directly onto the mounting surface portion of the tool body. The frame structure may have radially outermost surfaces that are flat. This may facilitate mounting of circuit boards and/or other components of the sensor module. It is also envisaged, though, that some components of the sensor module, for example a sensor for measuring a machining parameter, is mounted directly onto a part of the mounting surface portion of the tool body, and for example connected via cables to processing circuitry arranged on a circuit board mounted on the frame structure.

### BRIEF DESCRIPTION OF DRAWINGS

The solution will now be described in more detail by means of exemplary embodiments and with reference to the accompanying drawings, in which:
Fig. 1 illustrates a tool body of a turning tool according to an embodiment.
Fig. 2 illustrates a turning tool according to an embodiment including the tool body illustrated in Fig. 1 and a sensor module.
Fig. 3 is another view of the turning tool.
Fig. 4 illustrates the turning tool with the housing of the sensor module removed, showing components inside the sensor module.
Fig. 5 illustrates a turning tool according to an embodiment when machining a workpiece.
Fig. 6 is another illustration of the turning tool machining a workpiece as seen from a direction VI indicated in Fig. 5.
Fig. 7 is a front view of the sensor module.
Fig. 8 is a similar front view of the sensor module as shown in Fig. 7 but showing components inside the sensor module, and with the external surface of a housing of the sensor module indicated by dashed lines.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

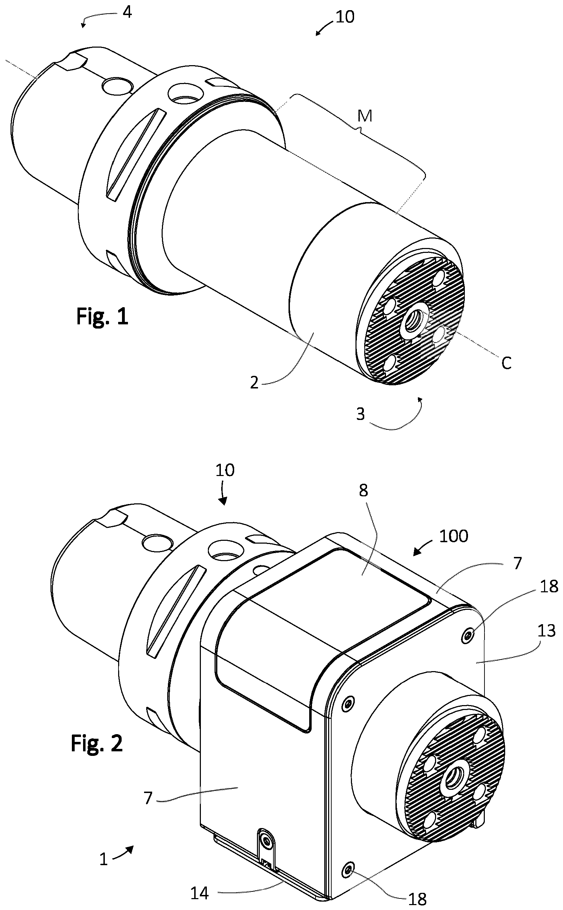

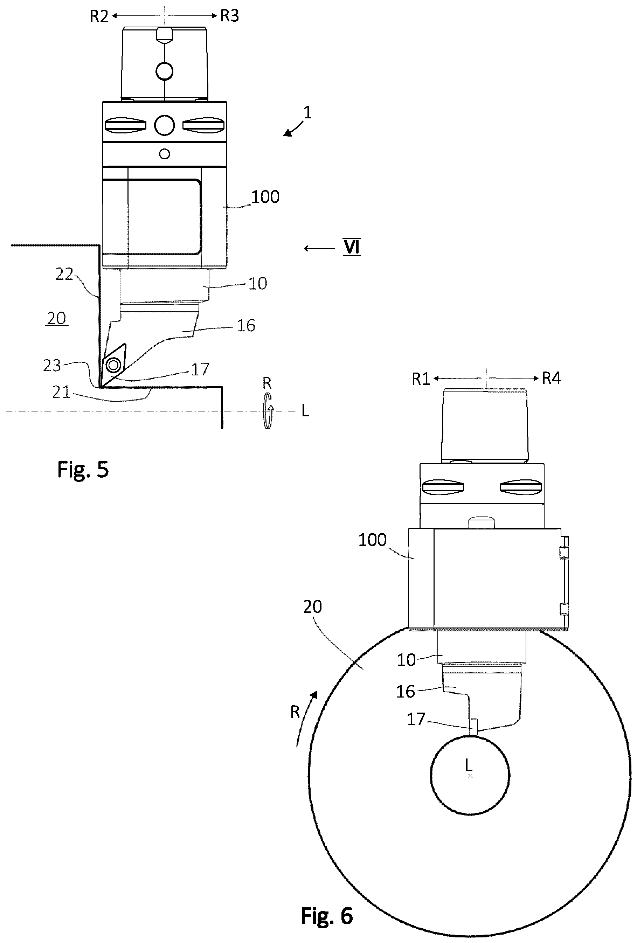

Fig. 1 illustrates a tool body 10 of a turning tool 1 according to an embodiment. The tool body 10 may correspond to a conventional tool body of a turning tool. The tool body 10 may also include small adaptations (not illustrated) for facilitating mounting of a sensor module 100 and components thereof on the tool body. Such adaptations could for example be screw holes. The tool body 10 includes an outer peripheral surface 2, a front end 3, and a rear end 4. The tool body extends longitudinally along a longitudinal axis C from the front end 3 to the rear end 4. The front end 3 includes an interface comprising a serrated surface at which a cutting head 16 (schematically illustrated in Figs. 5 and 6) is mountable. As seen in Fig. 1, in this embodiment the interface at the front end 3 is not symmetrically arranged with respect to the longitudinal axis C, meaning that a cutting head 16 will be excentrically arranged at the front end 3 of the tool body. The rear end 4 includes a coupling portion arrangeable to a machine tool. In the illustrated embodiment, the coupling portion is a quick-change coupling which in the industry is known as Coromant Capto^{®}.

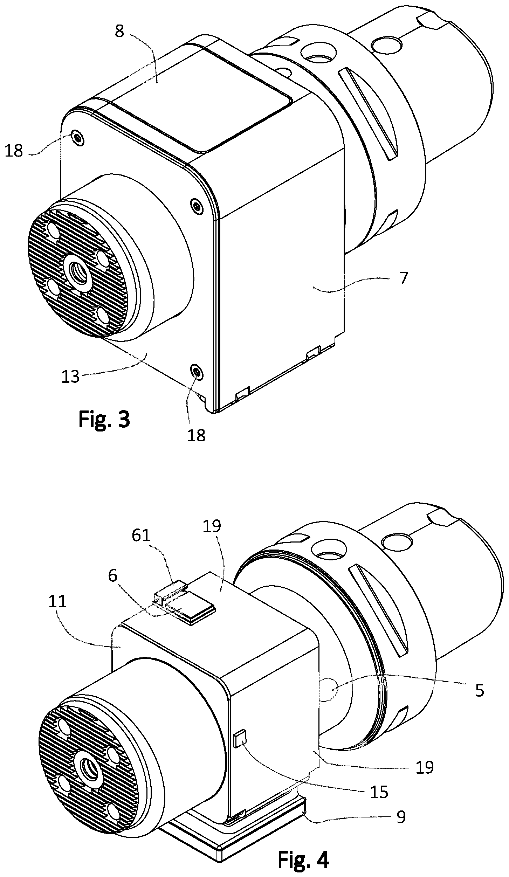

The outer peripheral surface 2 includes a mounting surface portion M, extending circumferentially all around the tool body 10. The mounting surface portion M corresponds to the portion of the outer peripheral surface on which a sensor module 100 is mounted, which is illustrated in Fig. 2. The sensor module 100 has a sensor module housing comprising a plurality of laterally facing outer side wall portions 7, in this case made of aluminum. The sensor housing also includes a lid 14 to a battery compartment. The sensor housing also includes a window portion 8. In the illustrated embodiment, the window portion 8 is made of plastic. The size and location of the window portion is selected such that wireless transmission of sensor signals can be transmitted through the window from an antenna 61 of a transmitter 6 (illustrated in Fig. 4).

The sensor housing further includes a forwardly facing outer front wall portion 13 covering other parts of the sensor module that face a forward direction. In the illustrated embodiment, the outer front wall portion 13 is made of steel and is fixed with screws 18 to an inner front wall portion (not visible in the drawings) of the housing that in this case is made of aluminum and is integrally formed or connected with the laterally facing outer side wall portions 7.

Figure 4 illustrates the tool body and the sensor module with the housing removed, exposing some of the components in the sensor module 100. The sensor module comprises a frame structure 11, in this case made of plastic, that is connected to a part of the mounting surface portion M and fixed thereto using an adhesive. Circuit boards 19 are mounted on the frame structure 11. As seen in Fig. 4, the frame structure 1 does not cover all the mounting surface portion M. On a rear part of the mounting surface portion M, axially behind the frame structure 11, a sensor 5 is mounted on the outer peripheral surface 2 of the tool body 10. In the illustrated embodiment, the sensor 5 is a strain gauge, only schematically illustrated, for measuring cutting forces and/or bending of the tool body when machining. Such strain gauges may be arranged at multiple positions around the circumference of the tool body, for example at four equally spaced positions around the circumference. The sensor module 100 includes an additional sensor 15 arranged at the circuit board 19. In this exemplary embodiment, the sensor 15 is an accelerometer that can be used for measuring vibrations during a machining operation. The sensor module 100 also includes a transmitter 6 on the circuit board 19 for wireless transmission of sensor signals via an antenna 61. The transmitter is located on a side of the circuit board in a position such as to maximize the spacing of the transmitter 6 and the antenna 61 from metal, and more precisely from the tool body 10 and from the metallic parts of the sensor module housing (i.e., in this case all parts except the window portion 8).

As also illustrated in Fig. 4, the sensor module further includes a battery 9 in a battery compartment located behind the lid 14.

The sensor module may include other components not illustrated in Fig. 4, for example components arranged on the circuit boards 19, such as processing circuitry and leads for conveying signals within the sensor module.

Fig. 5 illustrates the turning tool 1 in a machining operation wherein the turning tool is arranged to a machine tool (not shown) and cutting a workpiece 20 that rotates in a rotation direction R around a rotation axis L. The turning tool 1 includes the tool body 10, the sensor module 100 and a cutting head 16 arranged at the front end 3 of the tool body 10. The cutting head 16 comprises a cutting insert 17 engaged in cutting action with the workpiece 20.

As seen in Fig. 5, the sensor module 100 has a small extension along a radial directions R2 (and also along an opposite radial direction R3), such that the sensor module does not extend beyond the position of an active cutting edge of the cutting insert 17 in the radial direction R2. As a result, the sensor module will not interfere with a shoulder portion 22 of the workpiece 20, even when the turning tool cuts a longitudinal portion 21 of the workpiece close to a corner 23 connecting the longitudinal portion 21 with the shoulder portion 22.

Fig. 6 illustrates the turning tool from a direction VI indicated in Fig. 5 that corresponds to a direction along the second radial direction R2 towards the turning tool. As seen in Fig. 6, the sensor module 100 has a greater extension along a first radial direction R1 and a fourth radial direction R4. However, the parts of the sensor module that extend along these radial directions do not interfere with any part of the workpiece 20.

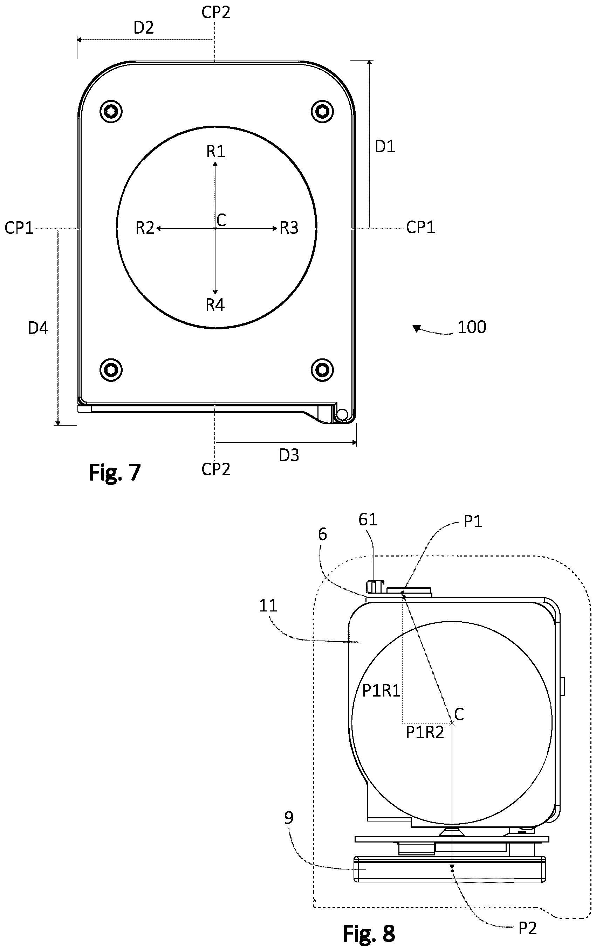

Fig. 7 is a front view of the sensor module 100, i.e., as seen from a direction along the longitudinal axis C toward the front end 3 of the tool body 10 (the tool body not shown in the drawing). Two central planes of the turning tool are illustrated in Fig. 7, namely a first central plane CP1 that contains the longitudinal axis C and the second and third radial directions R2, R3, and a second central plane CP2 that contains the longitudinal axis C and the first and fourth radial directions R1, R4. The sensor module has a first maximum extension D1 from the first central plane CP 1 in a direction that is codirectional and parallel to the first radial direction R1, a second maximum extension D2 from the second central plane CP2 in a direction that is codirectional and parallel to the second radial direction R2, a third maximum extension D3 from the second central plane CP2 in a direction that is codirectional and parallel to the third radial direction R3, and a fourth maximum extension D4 from the first central plane CP1 in a direction that is codirectional and parallel to the fourth radial direction R4.

As seen in Fig. 7, each of the first and fourth maximum extensions D1, D4 is greater than each of the second and third maximum extensions D2, D3.

Fig. 8 is a similar view as in Fig. 7 but showing the interior of the sensor module, with the outer walls of the sensor module housing indicated by dashed lines.

As seen in Fig. 8, the geometrical center of the transmitter 6 is located at a first radial position P1 having a component P1R1 in the first radial direction R1 that is greater than a component P1R2 in the second radial direction R2. The geometrical center of the battery 9 is located at a second radial position P2 having only a component in the fourth radial direction R4. With such arrangement, wherein the transmitter 6 and the battery 9 are located on opposite sides of the first central plane CP1, a well-functioning and user-friendly turning tool is achieved with a sensor module 100 having relatively small extension in the second and third radial directions.

## Claims

1. A turning tool (1) for machining a metal workpiece (20), wherein the turning tool comprises a tool body (10) including an outer peripheral surface (2), a front end (3), a rear end (4), and a longitudinal axis (C) extending from the front end (3) to the rear end (4), and wherein the turning tool (1) further comprises a sensor module (100) including at least one sensor (5, 15) for measuring a machining parameter, **characterized in that** the sensor module (100) is mounted on a mounting surface portion (M) of the outer peripheral surface (2) of the tool body (10) such that the sensor module (100) extends radially outward from the mounting surface portion (M) in one or more of a first radial direction (R1), a second radial direction (R2), a third radial direction (R3) and a fourth radial direction (R4), wherein the first radial direction (R1) is opposite the fourth radial direction (R4), and the second radial direction (R2) is opposite the third radial direction (R3), and wherein each of the second and third radial directions (R2, R3) is orthogonal to each of the first and fourth radial directions (R1, R4), wherein a first central plane (CP1) of the turning tool contains the longitudinal axis (C) and the second and third radial directions (R2, R3), and a second central plane (CP2) of the turning tool contains the longitudinal axis (C) and the first and fourth radial directions (R1, R4), and wherein the sensor module (100) has a first maximum extension (D1) from the first central plane (CP1) in a direction that is codirectional and parallel to the first radial direction (R1), and a second maximum extension (D2) from the second central plane (CP2) in a direction that is codirectional and parallel to the second radial direction (R2), wherein the first maximum extension (D1) is greater than the second maximum extension (D2).

2. A turning tool according to claim 1, wherein the sensor module has a third maximum extension (D3) from the second central plane (CP2) in a direction that is codirectional and parallel to the third radial direction (R3), and wherein the first maximum extension (D1) is greater than each of the second and third maximum extensions (D2, D3).

3. A turning tool according to claim 2, wherein the sensor module has a fourth maximum extension (D4) from the first central plane (CP1) in a direction that is codirectional and parallel to the fourth radial direction (R4), and wherein each of the first and fourth maximum extensions (D1, D4) is greater than each of the second and third maximum extensions (D2, D3).

4. A turning tool according to any of the previous claims, wherein the mounting surface portion (M) extends all around the circumference of the outer peripheral surface (2) of the tool body (10), and wherein the sensor module (100), at the mounting surface portion (M), circumferentially encloses the tool body (10).

5. A turning tool according to any of the previous claims, wherein the sensor module comprises a transmitter (6) including an antenna (61) for wireless transmission of sensor signals, wherein the transmitter (6) is located in the sensor module at a radial position (P1) having a component (P1R1) in the first radial direction (R1) that is greater than a component (P1R2) in any of the second or third radial directions (R2, R3).

6. A turning tool according to claim 5, wherein the sensor module comprises a housing that includes a window portion (8) located radially outwards of the antenna (61) of the transmitter (6) such that sensor signals may be transmitted through the window portion.

7. A turning tool according to claim 6, wherein the window portion (8) is made of a non-metallic material.

8. A turning tool according to any of the previous claims, wherein the sensor module comprises a battery (9) located in the sensor module at a radial position (P2) having a component in the first or fourth radial direction (R1, R4) that is greater than a component in any of the second or third radial directions (R2, R3).

9. A turning tool according to any of the previous claims, wherein the outer peripheral surface (2) of the tool body (10), in a cross-section perpendicular to the longitudinal axis (C) at the mounting surface portion (M), has a circular shape.

10. A turning tool according to any of the previous claims, wherein the sensor module includes a frame structure (11) connected to at least a part of the mounting surface portion (M) of the peripheral surface (2) of the tool body (10).

11. A turning tool according to claim 10, wherein the frame structure (11) is made of a non-metallic material.
